# EUROPÄISCHE PATENTANMELDUNG

(11) **EP 1 090 815 A2**
(43) Veröffentlichungstag der Anmeldung: **11.04.2001**
(21) Anmeldenummer: 00121237.2
(22) Anmeldetag: 02.10.2000
(51) Int. Cl.: B60R 21/26, B60R 21/20, B62D 1/04

(54) **Gasgenerator, Fahrzeuglenkrad mit integriertem Gasgenerator, Verfahren zum Herstellen eines Gasgenerators und eines Gassackrückhaltesystems mit integriertem Generator**

(30) Priorität: 04.10.1999 DE 19947676
(71) Anmelder: TRW Automotive Safety Systems GmbH & Co. KG, 63743 Aschaffenburg (DE)
(72) Erfinder: Frisch, Ralph, 63776 Mömbris (DE); Werner, Heribert, 63796 Kahl (DE); Winterhalder, Marc, 84519 Garching (DE); Ruckdeschel, Rolf, 87645 Schwangau (DE)
(74) Vertreter: Kitzhofer, Thomas, Dipl.-Ing.

(57) **Zusammenfassung**

Ein fahrzeugintegrierter Gasgenerator weist kein eigentliches Außengehäuse mehr auf, vielmehr wird das Außengehäuse durch die speziell umgeformte Fahrzeugstruktur gebildet, in die dann nur noch die Brennkammer (25, 27) eingesetzt wird. Die Fahrzeugstruktur ist beispielsweise das Lenkrad selbst oder ein Fahrzeugblech. Bei Integration des Gasgenerators in das Lenkrad kann dieses vorderseitig auch eine Öffnung zur Aufnahme eines Behälters (49) aufweisen, in dem der Gassack (53) untergebracht ist. In diesem Fall stellt das Lenkrad die Verbindung zwischen Gasgenerator und Gassack her und bildet das Außengehäuse eines Gassackmoduls.

## Beschreibung

Die Erfindung betrifft einen Gasgenerator für ein Fahrzeuginsassen-Rückhaltesystem, mit einem Außengehäuse, das wenigstens eine Gasausströmöffnung hat, und mit wenigstens einer mit Treibstoff gefüllten Brennkammer, wobei der Treibstoff nach dem Zünden über die Gasausströmöffnung aus dem Gasgenerator zum Fahrzeuginsassen-Rückhaltesystem strömt.

Gasgeneratoren müssen stabil ausgelegt sein, da im Rückhaltefall in ihnen ein hoher Druck erzeugt wird, dem das Außengehäuse des Gasgenerators standhalten muß. Auf der anderen Seite besteht die Forderung der Fahrzeughersteller, Gasgeneratoren zu schaffen, die sich durch ein niedriges Gewicht auszeichnen. Vorschläge, das Außengehäuse aus Kunststoff auszubilden, konnten bislang noch nicht in die Praxis umgesetzt werden.

Die Erfindung schafft einen Gasgenerator, der sich durch einen extrem einfachen Aufbau, ein geringes Gewicht, wenig Teile und eine leichte Montierbarkeit auszeichnet. Dies wird bei einem Gasgenerator der eingangs genannten Art dadurch erreicht, daß das Außengehäuse des Gasgenerators wenigstens abschnittsweise durch eine Fahrzeugstruktur gebildet ist. Unter Fahrzeugstruktur soll ein im Fahrzeug vorgesehenes Bauteil verstanden werden, an dem bisher der Gasgenerator oder das gesamte Gassack-Modul direkt oder indirekt befestigt wird. Dieses Teil bildet jetzt wenigstens einen Abschnitt des Außengehäuses des Gasgenerators, d.h. der Gasgenerator als solcher wird erst komplettiert, wenn seine Einzelbestandteile im Fahrzeug in die Struktur eingebaut sind. Vor dem Komplettieren im Fahrzeug hat der Gasgenerator kein oder nur ein unvollständiges Außengehäuse, und er stellt deshalb keine geschlossene, vollständige Einheit im herkömmlichen Sinne während des Zulieferns dar. Vielmehr ergibt sich die Einheit erst nach dem Einbau der Teile, insbesondere der Brennkammer und gegebenenfalls der Filterkammer in der Fahrzeugstruktur. Da die Fahrzeugstruktur ohnehin im Fahrzeug vorhanden ist, muß sie nur so umgeformt werden, daß sie zur Aufnahme der Brennkammer geeignet ist. Dadurch entfallen zahlreiche Teile, wie beispielsweise das bisher vorgesehene eigentliche Außengehäuse des Gasgenerators oder Trägerbleche für den Gasgenerator.

Gemäß der bevorzugten Ausführungsform ist die Brennkammer durch eine Brennkammerwandung begrenzt. Zudem ist eine Filterkammer im Gasgenerator vorgesehen, die mit der Brennkammer strömungsmäßig verbunden ist. Die Filterkammer ist nach außen durch ein Filterkammergehäuse begrenzt, das wenigstens abschnittsweise das Außengehäuse des Gasgenerators bildet und wenigstens abschnittsweise von der Fahrzeugstruktur gebildet ist. Die Filterkammer grenzt gemäß der bevorzugten Ausführungsform unmittelbar an die Brennkammer an, umgibt sie wenigstens teilweise oder z.B. umfangsmäßig vollständig. Ferner ist vorzugsweise auch kein eigenes Filterkammergehäuse vorgesehen, denn die Filterkammer grenzt unmittelbar an das Außengehäuse, das durch die Fahrzeugstruktur gebildet ist, an. In diesem Fall müssen nur die Brennkammer und das Filter in die Fahrzeugstruktur eingesetzt werden, und die Struktur muß anschließend geschlossen werden, damit sich ein geschlossener Hohlraum, der das Gasgeneratorinnere bildet, ergibt. Es sind also wenig Einzelteile notwendig, die in der Fahrzeugstruktur zum gesamten Gasgenerator komplettiert werden. Das Problem des Handlings der Einzelteile mit der Fahrzeugstruktur stellt im übrigen heutzutage ohnehin ein geringes Problem dar, da die meisten Zulieferer ohnehin zunehmend ganze Baugruppen liefern, wie beispielsweise ein Lenkrad samt Gasgenerator.

Die Fahrzeugstruktur ist vorzugsweise eines der folgenden Teile:
- das Fahrzeuglenkrad selbst,
- das Lenkradskelett, das eine entsprechende Form hat, um den Gasgenerator aufzunehmen,
- ein umgeformtes, fahrzeugfestes Aufnahmeblech im Armaturenbrett auf der Beifahrerseite, also an einem Ort, wo bislang das Gassack-Modul arretiert wurde,
- ein Rahmen des Fahrzeugsitzes (Sitzteil oder Rückenlehne), vorzugsweise in den Bereichen, in denen bereits jetzt ein Seitengassack-Modul befestigt wurde,
- eine Säule oder ein Rahmen des Fahrzeugs, also eine A-, B-, C- oder D-Säule, oder z.B. der Dachrahmen, wo bislang bereits Generatoren für Seitengassäcke wie z.B. sogenannte Windowbags untergebracht waren,
- ein Karosserieblechabschnitt,
- ein Rahmen der Kopfstütze oder
- ein Türblechabschnitt oder ein Türrahmen.

Die Fahrzeugstruktur wird vorzugsweise topfförmig umgeformt, und in diesen Topf werden dann die Brennkammer und das Filter eingesetzt. Die Kosten für einen solchen Umformvorgang sind im Vergleich zu denen für bisherige Generatorgehäuse zu vernachlässigen.

Vorzugsweise ist die Brennkammer durch eine Brennkammerwandung begrenzt, und die Fahrzeugstruktur hat eine Aufnahme zum Einsetzen und Fixieren der Brennkammerwandung. Ob die Brennkammerwandung stabil ausgebildet ist oder z.B. nur eine Folie ist, kann in diesem Zusammenhang offen bleiben. Wichtig ist nur, daß das Außengehäuse oder die Brennkammerwandung selbst gas- und feuchtedicht sind. Deshalb sollte die Brennkammer auch als separates, geschlossenes Teil ausgebildet sein. Der Zünder, der der Brennkammer zugeordnet ist, sollte ebenfalls an der Brennkammerwandung befestigt sein, damit bezüglich der Gas- und Feuchtedichtigkeit bei der Endmontage keine besonderen Vorkehrungen getroffen werden müssen. Wenn der Zünder samt Brennkammer eine abgeschlossene, gasdichte Einheit bildet, sind weitere aufwendige Abdichtungen unnötig.

Vorzugsweise ist die Fahrzeugstruktur das Lenkrad selbst, also die einstückige Einheit aus Nabenteil, Speichen und einem Kranz, die im Bereich der Nabe einen rückseitig offenen Hohlraum zur Aufnahme der Brennkammer aufweist. Es wird also kein zusätzliches Blech wie ein Halte- oder ein Aufnahmeblech für Treibstoff notwendig, das am Lenkrad separat zu befestigen ist. Vielmehr stellt das Lenkrad eine einstückige Einheit dar, in die nur noch die innenliegenden Teile eines Gasgenerators und der Gassack gesteckt werden müssen.

Eine einfache Art der Befestigung der Brennkammer im Hohlraum des Lenkrades besteht darin, sie zwischen einer Trennwand zur Vorderseite des Lenkrades, die den Hohlraum begrenzt, und einer auf die Lenkwelle aufzusetzenden Nabe axial zu klemmen. Die Nabe, die scheibenförmig und ein- oder mehrstückig ausgebildet sein kann, schließt rückseitig diesen Hohlraum und bildet den rückseitigen Teil des Außengehäuses des Gasgenerators.

Die Erfindung betrifft darüber hinaus ein Fahrzeuglenkrad mit einem darin integrierten erfindungsgemäßen Gasgenerator. Das Fahrzeuglenkrad hat eine vorderseitige Halterung zur Aufnahme eines gefalteten Gassacks, wobei das Lenkrad einen Gasführungskanal aufweist, der das vom Gasgenerator erzeugte Gas in den Gassack lenkt. Das erfindungsgemäße Lenkrad zeichnet sich nicht nur dadurch aus, daß es einen integrierten Gasgenerator hat, sondern auch durch eine einfache Montage des Gassacks. Am Lenkrad selbst ist nämlich vorderseitig eine Halterung für den Gassack vorgesehen, die das Einsetzen und Befestigen des Gassacks als separate Einheit erleichtert. Hierzu ist gemäß der bevorzugten Ausführungsform vorgesehen, daß die Halterung ein vorderseitig offener Aufnahmeraum ist. Der Gassack ist in einem topfförmigen Behälter untergebracht, wobei dieser Behälter eine vormontierte Einheit bildet und den Gassack in der gefalteten Stellung hält und schützt. Der Behälter samt Gassack wird dann nur noch vorderseitig in den Hohlraum im Lenkrad eingebracht. Der Behälter ist darüber hinaus vorderseitig mit einer Abdeckung geschlossen, die dann nach Einsetzen in das Lenkrad den vorderseitigen Abschluß des Lenkrades nach außen bildet. Die Abdeckung des Behälters ist ähnlich einer Modulabdeckung, wie sie bislang verwendet wird. Das Lenkrad verbindet die beiden Einheiten Gassack und Gasgenerator miteinander, auch strömungsmäßig, und bildet sozusagen ein Gehäuse des dann entstehenden Gassackmoduls.

Die Erfindung betrifft auch ein Verfahren zum Herstellen eines Gasgenerators, das einfach und kostengünstig ist. Es sieht die folgenden Schritte vor:

Es wird wenigstens eine mit Treibstoff gefüllte Brennkammer, die von einer Brennkammerwandung umgeben ist, hergestellt. Die Brennkammer bildet eine separate, geschlossene Einheit. An dieser Einheit ist vorzugsweise auch der Zünder befestigt.

Das Verfahren sieht ferner vor, daß eine Fahrzeugstruktur so umgeformt wird, daß sie einen Hohlraum für die Brennkammer bildet. Anschließend wird die Brennkammer in den Hohlraum in der Fahrzeugstruktur eingesetzt und der Hohlraum geschlossen. Das erfindungsgemäße Verfahren sieht also keine Herstellung eines separaten Außengehäuses für den Gasgenerator vor, das den Gasgenerator zu einer vormontierten, komplett geschlossenen Einheit macht. Vielmehr sieht das erfindungsgemäße Verfahren eine Integration der Brennkammer in die Fahrzeugstruktur, d.h. in die Umgebung im Fahrzeug vor, die ein separates Außengehäuse unnötig macht.

Vorzugsweise wird auch ein Filter mit in den Hohlraum eingesetzt, wobei der Filter an die Brennkammer angrenzt oder sie umgibt und unmittelbar an der Fahrzeugstruktur anliegt.

Die Fahrzeugstruktur ist eines der bereits zuvor erwähnten Teile.

Schließlich betrifft die Erfindung auch noch ein Verfahren zum Herstellen eines Gassackrückhaltesystems für einen Fahrzeuginsassen, wobei das Gassackrückhaltesystem einen erfindungsgemäßen Gasgenerator aufweist. Dieses erfindungsgemäße Verfahren sieht vor, daß der Gassack ebenfalls an der Fahrzeugstruktur befestigt ist und über die Fahrzeugstruktur am Gasgenerator angeschlossen wird. Die Fahrzeugstruktur verbindet damit den Gassack mit dem Gasgenerator.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
Fig. 1 eine Schnittansicht durch ein erfindungsgemäßes Fahrzeuglenkrad mit einem erfindungsgemäßen Gasgenerator,
Fig. 2 eine Seitenansicht eines entfalteten Torax-Rückhaltesystems, das in der Rückenlehne untergebracht ist und einen erfindungsgemäßen Gasgenerator aufweist,
Fig. 3 einen Abschnitt des Rahmens der Rückenlehne des Fahrzeugsitzes als Teil des Gasgenerators,
Fig. 4 ein Seitengassack-Rückhaltesystem mit einem in der C-Säule integrierten Gasgenerator,
Fig. 5 einen Schnitt durch die C-Säule im Bereich des dann integrierten Gasgenerators nach Fig. 4,
Fig. 6 ein Seitengassack-Rückhaltesystem mit einem im Dachrahmen integrierten Gasgenerator,
Fig. 7 einen Querschnitt durch den Dachrahmen im Bereich des darin integrierten Gasgenerators nach Fig. 6,
Fig. 8 eine Ansicht eines in der Tür integrierten Seitengassacks mit in der Tür integriertem Gasgenerator,
Fig. 9 einen Schnitt durch die in Fig. 8 gezeigte Tür im Bereich des darin integrierten Gasgenerators,
Fig. 10 einen Schnitt durch eine Fahrzeugtür gemäß einer anderen Ausführungsform,
Fig. 11 einen Schnitt durch einen Gasgenerator, dessen Außengehäuse im Instrumententafelträger auf der Beifahrerseite integriert ist, und
Fig. 12 einen Schnitt durch eine Kopfstütze mit integriertem Gasgenerator.

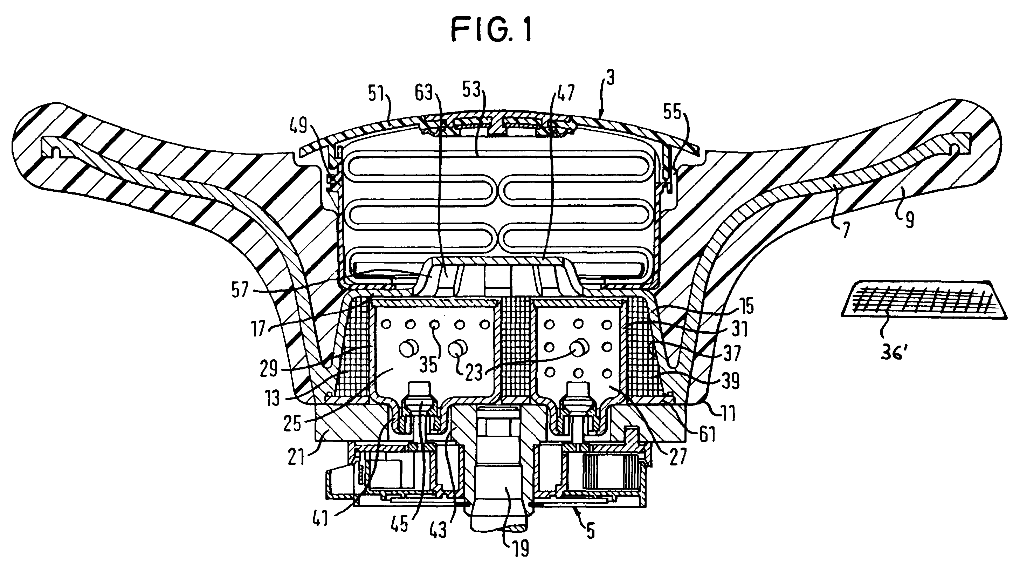

In Fig. 1 ist ein Fahrzeuglenkrad dargestellt, in das ein zweistufiger Gasgenerator integriert ist. Das Fahrzeuglenkrad weist eine Vorderseite 3 und eine Rückseite 5 auf und umfaßt im wesentlichen ein Lenkradskelett 7 aus Metall. Die Umschäumung des Lenkradskeletts ist mit 9 bezeichnet. Vom rückseitigen Ende 11 des Lenkrads aus erstreckt sich das Skelett 7 konusförmig nach innen und in Richtung Vorderseite 3 und begrenzt einen rückseitig offenen Hohlraum 13. Die den Hohlraum 13 begrenzenden Abschnitte des Skeletts 7 sind eine konische Umfangswand 15 sowie eine sich daran anschließende stirnseitige Trennwand 17, die rechtwinklig zur Lenkwelle 19 verläuft. Die Abschnitte 15, 17 des Lenkradskeletts bilden den Großteil des Außengehäuses eines im Lenkrad, das eine Fahrzeugstruktur darstellt, untergebrachten zweistufigen Gasgenerators. Das Außengehäuse des Gasgenerators wird durch eine Lenkradnabe 21 mit einem scheibenförmigen Fortsatz komplettiert. Die Lenkradnabe 21 schließt auch den Hohlraum 13. Der Gasgenerator besteht neben seinem Außengehäuse aus zwei mit Treibstoff 23 gefüllten Brennkammern 25, 27. Die Brennkammern 25, 27 besitzen eine sie begrenzende Brennkammerwandung 29 bzw. 31, die jeweils das Innere der zugeordneten Brennkammer nach außen hermetisch abdichten. Jede Brennkammer 25, 27 bildet somit ein separates, geschlossenes Teil. In den Brennkammerwandungen 29, 31 sind abgedichtete Ausströmöffnungen 35 vorgesehen. Das Innere des Gasgenerators wird zwischen dem Außengehäuse und den Brennkammern 25, 27 durch eine Filterkammer 37 mit darin eingesetztem Filter 39 ausgefüllt.

Jede Brennkammer hat einen rückseitigen Aufnahmefortsatz 41, der in einer zugeordneten Aufnahme 43 in Form einer Öffnung in der Lenkradnabe 41 fixiert wird. Im Bereich dieser Aufnahmefortsätze 41 sind Zünder 45 an der Brennkammerwandung befestigt, so daß jeder Brennkammer 25, 27 ein eigener Zünder 45 zugeordnet ist und der Treibstoff in jeder Brennkammer separat gezündet werden kann. Die Brennkammern werden in axialer Richtung zwischen der Trennwand 17 und der Lenkradnabe 21 geringfügig geklemmt.

Die Trennwand 17 ist im Zentrum nochmals topfförmig ausgeformt und bildet hier einen Diffusor 47, der in einen topfförmigen Behälter 49 ragt. In diesem Behälter 49, der zur Vorderseite 3 durch eine Abdeckung 51 geschlossen ist, ist ein gefalteter Gassack 53 untergebracht. Der Diffusor 47 und damit die Fahrzeugstruktur bilden einen Gasführungskanal 57 zwischen Gasgenerator und Gassack 53. Der Behälter 49 ist eine separate, vormontierte Einheit, die in den entsprechend ausgebildeten vorderseitigen Aufnahmeraum 55 im Lenkrad eingesteckt wird. Das Lenkrad mit Aufnahmeraum 55 bildet hier eine Halterung zur Aufnahme des Behälters 49.

In Fig. 1 ist die Filterkammer mit keinem eigenen Filterkammergehäuse versehen, vielmehr bildet außenseitig das Gasgeneratorgehäuse gleichzeitig auch das Filterkammergehäuse, an das das Filter 39 unmittelbar angrenzt. Ein Filter 39 muß nicht zwingend vorgesehen sein, es könnte beispielsweise nur eine Filterscheibe vor den Diffusor 47 geklemmt werden oder bei entsprechenden Treibstoffen oder entsprechend ausgebildetem Gassackgewebe könnte das Filter ganz entfallen. Anstatt des Filterraums ergäbe sich damit ein Gasverteilraum.

Das Lenkrad selbst bildet die Verbindung zwischen dem Behälter 49 und dem Gasgenerator, also sozusagen das Gehäuse des Gassackmoduls. Auf der anderen Seite bildet es auch das Gehäuse des Gasgenerators, so daß das gesamte Modul in das Lenkrad integriert ist. Das Lenkrad mit Gasgenerator und Gassack besteht demnach aus deutlich weniger Teilen als herkömmliche, mit Gassackmodulen bestückte Lenkräder.

Der in das Lenkrad integrierte Gasgenerator wird folgendermaßen hergestellt. Die Brennkammerwandungen 29, 31 werden z.B. durch Tiefziehen eines Bleches gebildet. Der jeweilige Zünder 45 wird daran befestigt. Anschließend wird der so entstandene Behälter, der noch eine offene Vorderseite hat, mit Treibstoff 23 befüllt und schließlich vorderseitig gasdicht verschlossen. Die Brennkammer 25, 27 bildet eine geschlossene Einheit. Die Fahrzeugstruktur, hier u.a. das Lenkradskelett, wird so umgeformt (bei einem Lenkradskelett aus Blech) oder gegossen (z.B. bei einem Lenkradskelett aus Leichtmetall), daß der Hohlraum 13 zur Aufnahme des Filters 39 samt Brennkammern 25, 27 entsteht, in den Filter und Brennkammern dann eingesetzt werden. Der Filter 39 grenzt dann unmittelbar an das Außengehäuse des Gasgenerators an. Anschließend wird rückseitig noch die Lenkradnabe 21 aufgesetzt und mit dem Lenkradskelett 7 verbunden. Ein auf die Lenkradnabe 21 aufgesetztes Abdichtblech 61 kann eine Abdichtung des Gasgeneratorinneren gegenüber dem Gasgeneratoräußeren verbessern.

Das Lenkrad als Teil des Gassackrückhaltesystems wird schließlich dadurch komplettiert, daß vorderseitig in den entsprechenden Aufnahmeraum der Behälter 49 eingesetzt und befestigt wird.

Anstatt des Filters 36 oder zusätzlich zum Filter 36 kann auch ein Filtereinsatz 36' vorgesehen sein, der in den Gasführungskanal 57 ausfüllt und in ihn eingesetzt wird.

Nach Aktivieren der Zünder 45 wird der Treibstoff 23 verbrannt. Das entstehende heiße Gas gelangt in die Filterkammer 37 und wird darin in Richtung Diffusor 47 umgelenkt, von wo aus es über Gasausströmöffnungen 63 in den Gassack 53 gelangt. Der Gassack 53 wird entfaltet und stößt die Abdeckung 51 nach vorne ab.

Das dargestellte Lenkrad muß nicht zwingend ein Lenkradskelett 7 aufweisen, es wäre auch die Verwendung eines Verbundwerkstoffs denkbar, der das Lenkrad selbst bildet. Darüber hinaus könnte auch eine entsprechende Umspritzung oder Umschäumung des Lenkradskeletts das Außengehäuse des Gasgenerators bilden, wobei hier natürlich die Temperaturbeständigkeit und die Druckbeständigkeit gegeben sein müssen.

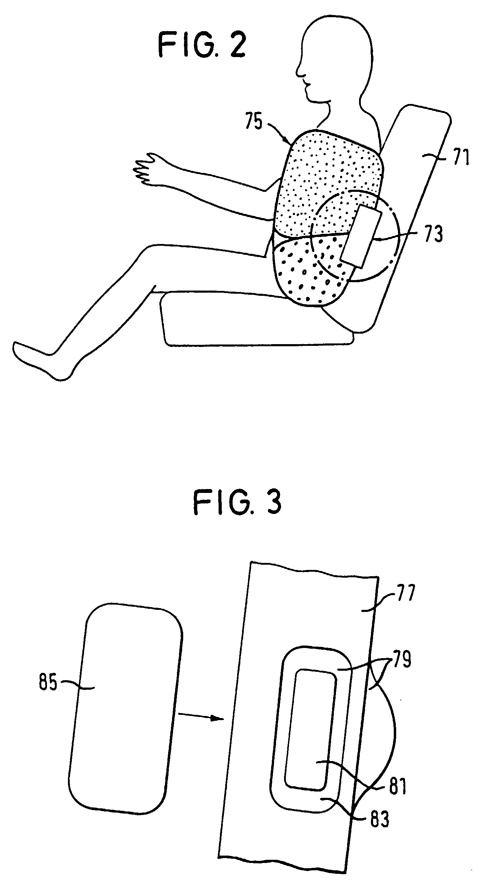

Bei der in Fig. 2 dargestellten Ausführungsform ist der Gasgenerator in dem Rahmen 77 einer Rückenlehne eines Fahrzeugsitzes 71 untergebracht. In Fig. 2 ist die Lage des Gasgenerators 73 nur schematisch dargestellt. 75 zeigt den Torax-Gassack in aufgeblasenem Zustand.

In Fig. 3 ist der Rahmen 77 der Rückenlehne abschnittsweise dargestellt. Der Rahmen besteht aus Blech, das im Bereich des Gasgenerators umgeformt wird, so daß sich eine Art Wanne 79 bildet. In diese Wanne ist eine Brennkammer 81 eingesetzt, die mit Treibstoff gefüllt ist. Der Hohlraum 83, der durch Umformen des Rahmens 77 gebildet wird, wird durch einen Blechdeckel 85 verschlossen, der neben dem Rahmen 77, der eine Fahrzeugstruktur darstellt, das Außengehäuse des Gasgenerators bildet. Auch bei dieser Ausführungsform hat der Gasgenerator kein eigenes Gehäuse, sondern das Gehäuse ist quasi durch die Fahrzeugstruktur selbst gebildet.

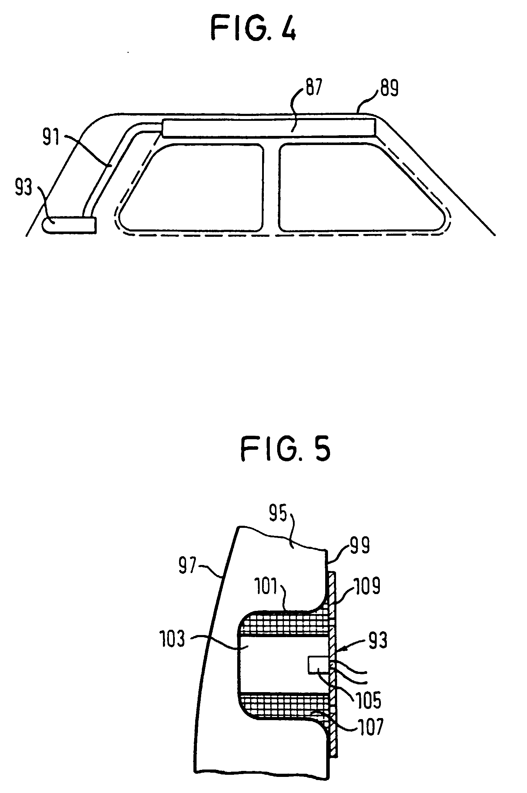

Bei der in Fig. 4 dargestellten Ausführungsform ist ein Kopf-Seitengassack-Rückhaltesystem, auch Windowbag-System genannt, dargestellt. Der entsprechende Gassack ist in einem Behälter 87 untergebracht, der am Dachrahmen 89 des Fahrzeugs befestigt ist. Über eine Rohrleitung 91 ist das Innere des Gassacks mit einem Gasgenerator 93 verbunden, der ein Außengehäuse hat, welches durch die Fahrzeugstruktur, genauer gesagt durch einen umgeformten Abschnitt der C-Säule des Fahrzeugs gebildet ist. In Fig. 5 ist die C-Säule 95 näher dargestellt. 97 bezeichnet das fahrzeugaußenseitige Blech und 99 das innenseitige, die C-Säule mitdefinierende Blech, also einen Karosserieblechabschnitt. Das Blech 99 weist eine Vertiefung 101 auf, die einen Teil des Außengehäuses des Gasgenerators 93 bildet. In dem entstehenden Hohlraum wird die Brennkammer 103 samt Zünder 105 eingesetzt. 107 bezeichnet das Filter. Eine Platte 109 komplettiert das Außengehäuse des Gasgenerators 93, indem sie den Hohlraum zur Aufnahme der Brennkammer und der sie umgebenden Filterkammer schließt.

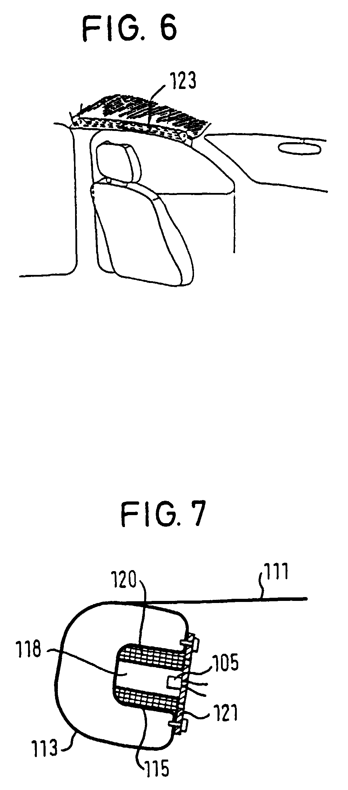

Die in Fig. 6 dargestellte Ausführungsform zeigt ein Seitengassack-Rückhaltesystem mit einem Window-Bag nur für einen Fahrzeugfrontinsassen. Bei dieser Ausführungsform ist der Gasgenerator in dem Dachrahmen, der in Fig. 7 zu sehen ist, untergebracht. Das Bezugszeichen 111 bezeichnet das Dachblech, und mit 113 ist der Dachrahmen schematisch dargestellt. Der Dachrahmen 113 ist innenseitig so umgeformt, daß ein Hohlraum 115 entsteht, in dem die Brennkammer 118 und das Filter 120 untergebracht sind. Der umgeformte Abschnitt des Dachrahmens 113 zusammen mit einem Abschlußblech 121 bilden das Außengehäuse des dadurch gebildeten Gasgenerators.

Der Gasgenerator 123 ist in Fig. 6 schematisch dargestellt.

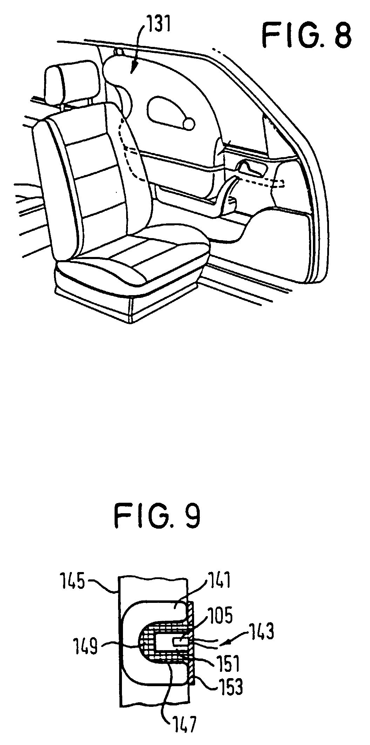

In Fig. 8 ist ein entfalteter Torax-Kopf-Gassack 131 zu sehen, der in der Tür eines Fahrzeugs integriert ist.

In Fig. 9 ist der in eine Versteifungsrippe 141 integrierte Gasgenerator 143 zu sehen. Die Versteifungsrippe 141, die einen Teil des Türrahmens bildet, schließt sich an das außenseitige Türblech 145 an und hat einen umgeformten Abschnitt, der einen Hohlraum 147 bildet, in den das Filter 149 und die Brennkammer 151 gesteckt werden. Eine Platte 153 schließt das Innere des Gasgenerators ab. Über Öffnungen in der Platte kann das erzeugte Gas in den über die Platte 153 an der Rippe 141 befestigten Gassack einströmen.

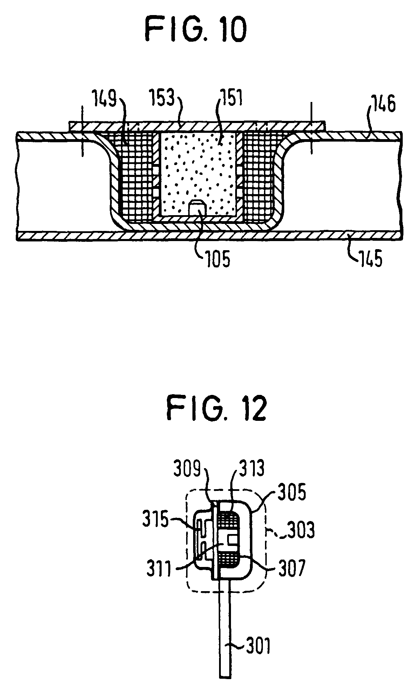

Alternativ kann auch ein innenseitiges Türblech 146 einen Teil des Außengehäuses des Gasgenerators bilden, wie Fig. 10 zeigt.

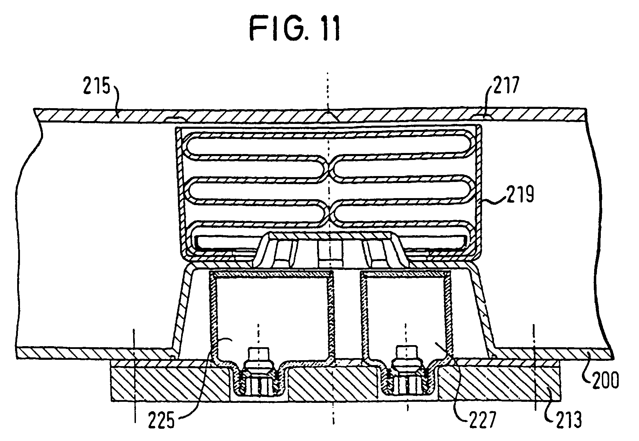

Auch im Beifahrerbereich (Fig. 11) ist es sehr einfach, das Außengehäuse durch die Fahrzeugstruktur großteils zu bilden. Hier kann ein Aufnahmeblech, genauer ein Instrumententafelträger 200, zur Befestigung der Armaturentafel umgeformt werden, so daß eine Wanne entsteht, in der Brennkammern 225, 227 untergebracht werden. 213 bezeichnet ein Blech hinter der Armaturentafel und 215 die Instrumententafel im Beifahrerbereich, die Schwächungen 217 aufweist, welche Klappen definieren. Der Behälter 219 mit dem Gassack ist am Instrumententafelträger 200 befestigt.

Die Erfindung ist nicht nur auf ein Gassackrückhaltesystem beschränkt. Der erfindungsgemäße Gasgenerator könnte beispielsweise auch in einer B-Säule untergebracht sein und einen Gurtstraffer betätigen. Auch das Fahrzeugbodenblech könnte eine entsprechende Aufnahme für Brennkammern aufweisen.

Fig. 12 zeigt einen Längsschnitt durch eine Kopfstütze mit zwei Haltestangen 301, die innerhalb der Polsterung 303 (mit unterbrochenen Linien dargestellt) durch einen Blechrahmen 305 miteinander verbunden sind. Der Blechrahmen 305 hat eine Vertiefung 307, die mit einer Platte 309 das Außengehäuse des Gasgenerators bildet. 311 bezeichnet die Brennkammer, 313 die Filterkammer und 315 den Gassack.

## Patentansprüche

1. Gasgenerator für ein Fahrzeuginsassen-Rückhaltesystem,
mit einem Außengehäuse, das wenigstens eine Gasausströmöffnung (63) aufweist,
mit wenigstens einer mit Treibstoff (23) gefüllten Brennkammer (25, 27; 81; 103, 118; 151; 225, 227),
wobei der Treibstoff (23) nach dem Zünden über die Gasausströmöffnung (63) aus dem Gasgenerator zum Fahrzeuginsassen-Rückhaltesystem strömt,
dadurch gekennzeichnet,
daß das Außengehäuse des Gasgenerators wenigstens abschnittsweise durch eine Fahrzeugstruktur gebildet ist.

2. Gasgenerator nach Anspruch 1, dadurch gekennzeichnet, daß die Brennkammer (25, 27; 81; 103, 118; 151; 225, 227) durch eine Brennkammerwandung (29, 31) begrenzt ist und eine mit der Brennkammer (25, 27; 81; 103, 118; 151; 225, 227) strömungsmäßig verbundene Filterkammer (37) im Gasgenerator vorgesehen ist, die nach außen durch ein Filterkammergehäuse begrenzt ist, das wenigstens abschnittsweise das Außengehäuse des Gasgenerators bildet.

3. Gasgenerator nach Anspruch 2, dadurch gekennzeichnet, daß die Filterkammer (37) außenseitig an die Brennkammer (25, 27; 81; 103, 118; 151; 225, 227) angrenzt.

4. Gasgenerator nach einem der vorhergehenden Ansprüche, dadurch gekennzeichnet, daß die Fahrzeugstruktur eines der folgenden Teile ist:
- das Fahrzeuglenkrad,
- das Lenkradskelett (7),
- ein umgeformtes, fahrzeugfestes Aufnahmeblech (200) im Armaturenbrett auf der Beifahrerseite,
- ein Rahmen (77) des Fahrzeugsitzes,
- ein Rahmen (77) der Rückenlehne,
- eine Säule (95) oder ein Rahmen (113) des Fahrzeugs oder
- ein Karosserieblechabschnitt,
- ein Rahmen der Kopfstütze,
- ein Türblechabschnitt oder ein Türrahmen.

5. Gasgenerator nach Anspruch 4, dadurch gekennzeichnet, daß die Brennkammer (25, 27; 81; 103, 118; 151; 225, 227) durch eine Brennkammerwandung (29, 31) begrenzt ist und daß die Fahrzeugstruktur eine Aufnahme zum Einsetzen und Fixieren der Brennkammerwandung (29, 31) hat.

6. Gasgenerator nach Anspruch 5, dadurch gekennzeichnet, daß die Brennkammer (25, 27; 81; 103, 118; 151; 225, 227) als separates geschlossenes Teil ausgebildet ist.

7. Gasgenerator nach Anspruch 5 oder 6, dadurch gekennzeichnet, daß der Brennkammer (25, 27; 81; 103, 118; 151; 225, 227) ein Zünder (45; 105) zugeordnet ist, der an der Brennkammerwandung (29, 31) befestigt ist.

8. Gasgenerator nach einem der vorhergehenden Ansprüche, dadurch gekennzeichnet, daß der Bereich mit der Gasausströmöffnung (63) in der Fahrzeugstruktur zu einem Diffusor (47) umgeformt ist.

9. Gasgenerator nach einem der vorhergehenden Ansprüche, dadurch gekennzeichnet, daß die Fahrzeugstruktur das Lenkrad selbst ist, welches im Bereich seiner Nabe einen rückseitig offenen Hohlraum (13) als Aufnahme für die Brennkammer (25, 27) aufweist.

10. Gasgenerator nach Anspruch 9, dadurch gekennzeichnet, daß die Brennkammer (25, 27) eine Brennkammerwandung (29, 31) hat, die die Brennkammer (25, 27) umgibt, und daß die Brennkammerwandung (29, 31) zwischen einer den Hohlraum (13) zur Vorderseite des Lenkrads begrenzenden Trennwand (17) und einer auf die Lenkwelle (19) aufzusetzenden Nabe (21) axial geklemmt ist.

11. Gasgenerator nach Anspruch 10, dadurch gekennzeichnet, daß die Nabe (21) scheibenförmig ausgebildet ist und den Hohlraum (13) rückseitig schließt und Teil des Außengehäuses ist.

12. Gasgenerator nach Anspruch 11, dadurch gekennzeichnet, daß die Brennkammerwandung (29, 31) einen Aufnahmefortsatz (41) hat und die Nabe (21) eine Aufnahme (43) zum Einsetzen des Aufnahmefortsatzes (41) aufweist.

13. Fahrzeuglenkrad, mit einem darin integrierten Gasgenerator nach einem der vorhergehenden Ansprüche und mit einer vorderseitigen Halterung (55) zur Aufnahme eines gefalteten Gassacks (53),
wobei das Lenkrad einen Gasführungskanal (57) aufweist, der das vom Gasgenerator erzeugte Gas in den Gassack (53) lenkt.

14. Fahrzeuglenkrad nach Anspruch 13, dadurch gekennzeichnet, daß die Halterung (55) ein vorderseitig offener Aufnahmeraum im Lenkrad ist und der Gassack (53) in einem topfförmigen Behälter (49) untergebracht ist, der in den Aufnahmeraum eingesetzt ist, und daß der Behälter (49) vorderseitig eine ihn schließende Abdeckung aufweist, die den vorderseitigen Abschluß des Lenkrades nach außen bildet.

15. Verfahren zum Herstellen eines Gasgenerators für ein Fahrzeuginsassen-Rückhaltesystem, dadurch gekennzeichnet,
daß wenigstens eine mit Treibstoff (23) gefüllte Brennkammer (25, 27; 81; 103, 118; 151; 225, 227), die von einer Brennkammerwandung (29, 31) umgeben ist, hergestellt wird,
wobei die Brennkammer (25, 27; 81; 103, 118; 151; 225, 227) eine separate, geschlossene Einheit bildet,
daß eine Fahrzeugstruktur so geformt wird, daß sie einen Raum zur Aufnahme einer Brennkammer (25, 27; 81; 103, 118; 151; 225, 227) bildet,
daß die Brennkammer (25, 27; 81; 103, 118; 151; 225, 227) in den Raum in der Fahrzeugstruktur eingesetzt wird und
daß der Raum geschlossen wird.

16. Verfahren nach Anspruch 15, dadurch gekennzeichnet, daß in den Raum ein Filter (39; 107; 120; 149) und die Brennkammer (25, 27; 81; 103, 118; 151; 225, 227) eingesetzt werden, wobei der Filter (29; 107; 120; 149) an die Brennkammer (25, 27; 81; 103, 118; 151; 225, 227) angrenzt und unmittelbar an der Fahrzeugstruktur anliegt.

17. Verfahren nach Anspruch 15 oder 16, dadurch gekennzeichnet, daß als Fahrzeugstruktur folgende Teile verwendet werden:
- das Fahrzeuglenkrad,
- das Lenkradskelett (7),
- ein umgeformtes, fahrzeugfestes Aufnahmeblech (200) im Armaturenbrett auf der Beifahrerseite,
- ein Rahmen (77) des Fahrzeugsitzes,
- ein Rahmen (77) der Rückenlehne,
- eine Säule (95) oder ein Rahmen (113) des Fahrzeugs oder
- ein Karosserieblechabschnitt.

18. Verfahren zum Herstellen eines Gassackrückhaltesystems für einen Fahrzeuginsassen, wobei das Gassackrückhaltesystem einen Gasgenerator hat, der nach einem der Ansprüche 15 bis 17 hergestellt ist, und wobei ein Gassack (53) bereitgestellt wird, der ebenfalls an der Fahrzeugstruktur befestigt und über die Fahrzeugstruktur an den Gasgenerator angeschlossen wird.
